# EUROPÄISCHE PATENTSCHRIFT

(11) **EP 1 296 122 B1**
(45) Veröffentlichungstag und Bekanntmachung des Hinweises auf die Patenterteilung: **24.01.2007**
(21) Anmeldenummer: 02019184.7
(22) Anmeldetag: 02.09.2002
(51) Int. Cl.: G01J 5/10, G01J 5/12, G01J 5/20

(54) **Sensor zum berührungslosen Messen einer Temperatur**
Sensor for contactless measuring of a temperature
Capteur pour la mesure sans contact d'une température

(30) Priorität: 10.09.2001 DE 10144343
(43) Veröffentlichungstag der Anmeldung: 26.03.2003
(73) Patentinhaber: PerkinElmer Optoelectronics GmbH, 65199 Wiesbaden (DE)
(72) Erfinder: Schieferdecker, Jörg, 65388 Schlangenbad (DE); Hausner, Martin, 65193 Wiesbaden (DE); Leneke, Wilhelm, 65232 Taunusstein (DE); Simon, Marion, 65307 Bad Schwalbach (DE)
(74) Vertreter: Beetz & Partner

(56) Entgegenhaltungen:
- EP-A- 0 898 159
- EP-A- 1 039 280
- WO-A-01/14838
- WO-A-01/65222
- DE-A- 3 925 391
- DE-A- 4 221 037
- DE-A- 19 710 946
- US-A- 4 032 363
- US-A- 5 100 479

## Beschreibung

Die Erfindung betrifft einen Sensor zum Messen einer Temperatur mittels eines auf und/oder unter einer Membran aufgebrachten wärmesensitiven Bereichs, wobei die Membran über einer Aussparung angeordnet ist.

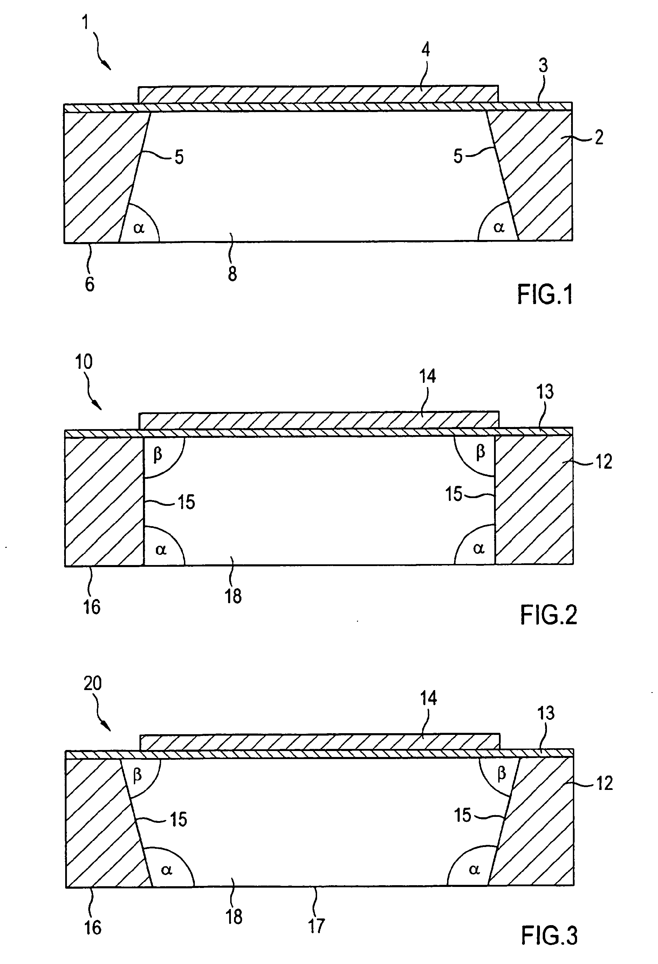

Einen solchen Sensor zeigt Fig. 1. Der Sensor gemäß Fig. 1 weist Seitenwände auf, die in einem Winkel α zur Unterseite des Sensors, also der der Membran gegenüberliegenden Seite, angeordnet sind. Bei einem bekannten Sensor gemäß Fig. 1 beträgt der Winkel α in etwa 54,7°.

Bekannt sind solche Sensoren als thermische Infrarot-Sensoren, die insbesondere als Thermopile-Sensoren ausgestaltet sind, und bei denen der Sensor in Mikromechanik-Technologie hergestellt wird. Dabei befindet sich auf der Oberseite eines Silizium-Substrats, aus dem der Sensor hergestellt wird, eine dünne Membran, die aus dielektrischen Schichten, z.B. SiO₂ oder Si₃N₄ oder deren Kombination, hergestellt ist. Die Membran wird durch anisotropes Ätzen, z.B. durch KOH oder EDP, ausgeführt, wobei quadratische Membranstrukturen im Silizium entstehen können, wenn die Kristallorientierung des Silizium-Chips <1OO> ist. Die Wände der Siliziumätzung folgen der sogenannten 111-Ebene, wodurch die charakteristischen schrägen Wände von ca. 54,7° entstehen. Entsprechende Sensoren zur Temperaturmessung sind z.B. aus der EP 1 039 280 A2, EP 1 045 232 A2, EP 0 599 364 B1, US 3,801,949, US 5,693,942, DE 42 21 037 A1 und der DE 197 10 946 A1 bekannt.

Aus der EP 0 898 159 sind ein Sensorsystem und ein Herstellungsverfahren hierfür sowie ein Selbsttestverfahren bekannt. Sensorelemente sind auf einer Membran aufgebracht, die ihrerseits über einem länglichen Graben liegen kann, so daß über einem Graben mehrere Sensorelemente liegen. Allerdings können pro Materialaussparung auch nur ein einzelnes Sensorelement vorgesehen sein. Die Materialaussparungen sind entweder rund (Figuren 3A, 3B) oder haben rautenförmigen Grundriß oder schräge Wände (Figuren 2A bis 2D).

Die EP 1 039 280 A2 beschreibt einen Infrarot-Sensor und ein Herstellungsverfahren hierfür. Er weist Thermopiles auf. Die Thermopiles bzw. deren warme Enden liegen auf einer Membran über der Aussparung eines Rahmens, dessen Innenwände schräg sind. Die Thermopiles weisen n-dotierte polykristalline Siliciumschichten und damit in Verbindung stehende Metallschichten auf.

DE 197 10 946 beschreibt einen Thermopile-Sensor und ein Strahlungsthermometer mit einem Thermopile-Sensor. Die Thermoelemente können aus p-poly-Silicium/n-poly-Silicium bestehen.

Aufgabe der Erfindung ist es, einen verbesserten Sensor zur Temperaturmessung und ein entsprechendes Verfahren zu dessen Herstellung anzugeben. Dabei ist es wünschenswert, einen entsprechenden Sensor bei gleicher Empfindlichkeit möglichst mit geringeren Abmessungen als die bekannten Sensoren zu gestalten, oder einen Sensor bei gleichen Abmessungen empfindlicher zu gestalten.

Diese Aufgabe wird durch einen Sensor zum Messen einer Temperatur mittels eines auf und/oder unter einer über einer Aussparung angeordneten Membran aufgebrachten wärmesensitiven Bereichs gelöst, wobei die Aussparung durch ein reaktives Ionenätzverfahren geätzt ist. Als reaktives Ionenätzverfahren wird dabei in besonders vorteilhafterweise deep reactive ion etching (DRIE) eingesetzt. Ein derartiger Sensor weist eine in Bezug auf seine Größe besonders hohe Empfindlichkeit auf. Ein solcher Sensor ist insbesondere im Vergleich zu bekannten Sensoren bei gleicher Empfindlichkeit merklich kleiner. Dabei wird das reaktive Ionenätzverfahren derart eingesetzt, daß die Aussparung seitlich voll-ständig durch Seitenwände begrenzt ist, wobei aneinandergrenzende Seitenwände in einem Winkel von mindestens 80° zueinander angeordnet sind. Mittels des reaktiven Ionenätzverfahrens wird zudem die Aussparung derart geätzt, daß alle Seitenwände in einem Winkel zwischen 80° und 100° zu der Membran angeordnet sind.

Ein solcher Sensor hat bei großer Sensitivität eine besonders geringe Abmessung und einen besonders schmalen Außenrand von Silizium und ist auf der Frontseite für Bondinseln und auf der Rückseite zur mechanischen Befestigung auf einer Gehäusebodenplatte mit Epoxidharz-Randfläche (typischerweise O,1 bis 0,2 mm) geeignet.

Auf dem wärmesensitiven Bereich kann eine sogenannte Passivierungsschicht, z.B. aus Si₃N₄, aufgebracht sein.

Ein besonders kleiner Sensor wird durch eine vorteilhafte Ausgestaltung der Erfindung erzielt, bei der aneinandergrenzende Seitenwände in einem Winkel von im wesentlichen 90° zueinander angeordnet sind. Ein solcher Sensor hat bei großer Sensitivität eine besonders geringe Abmessung, denn ein solcher Sensor ist bei gleicher Sensitivität in etwa 0,5 - 0,7 mm kleiner als bekannte Sensoren.

In vorteilhafter Ausgestaltung der Erfindung ist zumindest eine Seitenwand derart in einem Winkel zwischen 85° und 9O°, zu der Membran angeordnet, daß die die Aussparung begrenzende Fläche der Membran größer ist als eine der Membran gegenüber stehende offene (oder ggf. geschlossene) Fläche. Dabei sind vorteilhafterweise alle Seitenwände derart in einem Winkel zwischen 85° und 90°, zu der Membran angeordnet, daß die die Aussparung begrenzende Fläche der Membran größer ist als eine der Membran gegenüberstehende offene (oder ggf. geschlossene) Fläche. Ein solcher Sensor ist ohne Einbuße der Empfindlichkeit mechanisch besonders stabil.

In weiterhin vorteilhafter Ausgestaltung der Erfindung bestehen alle Seitenwände im wesentlichen aus Silizium.

In weiterhin vorteilhafter Ausgestaltung der Erfindung ist der Sensor als Thermopile ausgebildet, wobei der wärmesensitive Bereich eine Reihenschaltung aus zumindest zwei thermoelektrischen Materialien, insbesondere Materialien jeweils aus p-leitendem Silizium und Aluminium oder n-leitendem Silizium und Aluminium oder p-leitendem Silizium und n-leitendem Silizium, aufweist. Das thermoelektrische Material kann kristallines oder polykristallines Silizium, Polysilizium-Germanium oder amorphes Silizium sein. Besonders vorteilhaft ist es dabei, wenn die Reihenschaltung nebeneinander angeordnete Bereiche aus p-leitendem Silizium und n-leitendem Silizium aufweist, die über eine Metallbrücke, insbesondere Aluminium (vorteilhafterweise mit zwei Kontaktfenstern), miteinander verbunden sind. Durch die Ausgestaltung der nebeneinander angeordneten Bereiche aus p-leitendem Silizium und n-leitendem Silizium läßt sich die Signalspannung des Sensors gegenüber einer Ausführungsform aus n-leitendem Polysilizium und Aluminium um 30 bis 80 % erhöhen.

In weiterhin vorteilhafter Ausgestaltung des Sensors als Thermopile weist die Reihenschaltung zumindest eine p-leitende Siliziumschicht und zumindest eine n-leitende Siliziumschicht auf, die übereinander angeordnet und durch eine Isolationsschicht, insbesondere durch Siliziumoxid oder Siliziumnitrid, getrennt sind. Auf diese Weise läßt sich die Signalspannung des Sensors um weitere 10 bis 15 % erhöhen.

In weiterhin vorteilhafter Ausgestaltung der Erfindung ist der Sensor als pyroelektrischer Sensor ausgebildet, wobei der wärmesensitive Bereich einen Stapel aus zwei Elektrodenschichten und eine zwischen den zwei Elektrodenschichten angeordnete pyroelektrische Schicht, insbesondere eine pyroelektrische Dünnschicht, z.B. pyroelektrische Keramik oder Polymerschichten, aufweist, die insbesondere durch sputtern, Aufschleudern oder CVD-Prozess auf der unteren Elektrodenschicht aufgebracht ist.

In weiterhin vorteilhafter Ausgestaltung der Erfindung ist der Sensor als Bolometer ausgebildet, wobei der wärmesensitive Bereich eine Mäanderschicht aus einem Metalloxid oder einem Halbleiter, insbesondere mit einem sehr hohen Temperaturkoeffizienten, d.h. insbesondere einem Temperaturkoeffizienten von mindestens 2·10⁻³ K⁻¹, bevorzugt 2·10⁻² K⁻¹, des Widerstandes aufweist.

In weiterhin vorteilhafter Ausgestaltung der Erfindung ist die Membran rechteckig, vorteilhafterweise quadratisch. Dabei weist die Membran in vorteilhafter Ausgestaltung der Erfindung an ihren Ecken Aussparungen auf, so daß sich eine kreuzförmige Grundfläche ergibt. In diesen Aussparungen sind vorteilhafterweise Bondinseln vorgesehen.

In weiterhin vorteilhafter Ausgestaltung der Erfindung ist der Sensor in einen Halbleiterchip, insbesondere einen Siliziumchip, integriert.

Beim einem Verfahren zum Herstellen eines erfindungsgemäßen Sensors zum Messen einer Temperatur wird vorteilhafterweise eine Membran auf einen Träger, vorteilhafterweise einen Siliziumträger, aufgebracht und unter der Membran durch ein reaktives Ionenätzverfahren eine Aussparung in den Träger geätzt. Als reaktives Ionenätzverfahren wird dabei in besonders vorteilhafter Weise deep reactive ion etching (DRIE) eingesetzt.

Zur Herstellung der nahezu senkrechten Seitenwände der Ätzgruben im Silizium wird vorteilhaft ein sog. ICP-Reaktor (inductively coupled plasma) benutzt, bei dem im Gegensatz zu einem RIE-Reaktor (reactive ion etching) dem Plasma zusätzlich über induktive Einkopplung Energie zugeführt wird. Dies führt zu einer extrem hohen Ionisationsdichte und ermöglicht hohe Ätzraten von einigen µm Silizium pro Minute.

Das (isotrope) Ätzen erfolgt mit Fluor-Radikalen (z.B. SF6 als Ätzgas), wobei im rhythmischen Wechsel einer Ätzphase eine sog. Passivierungsphase folgt, bei der an der Oberfläche der Seitenwände (der Ätzgruben) eine Polymerschicht abgeschieden wird (z.B. durch Zugabe von C4F8), die eine seitlich gerichtete Ätzung verhindert. Am Boden der Gruben wird durch Anlegen einer BIAS-Spannung die Polymerbildung verhindert. Dieser Prozeß ist z.B. in der US 550 18 93 näher fenbart

Überraschenderweise hat sich gezeigt, daß oben beschriebenes Verfahren (im folgenden auch als Prozeß bezeichnet) für folgende Anwendungen einsetzbar ist:
- Sogenanntes "Through the wafer etching": Im Gegensatz zu üblichen Prozessen mit einer Ätztiefe von wenigen zehn µm wird der Wafer vollständig durchgeätzt (Ätztiefe ca. 200 bis 800 µm)
- Die dem Plasma während des Ätzvorganges ausgesetzte Fläche beträgt ca. 20% bis 50% der gesamten Waferfläche. (Übliche Prozesse ätzen auf nur wenigen % der Gesamtfläche.) Um eine ausreichende Homogenität der Ätztiefe über den gesamten Wafer sicherzustellen, muß der Prozeß mit sehr geringer Selektivität zum Maskenmaterial geführt werden. Dies wiederum erfordert die Verwendung eines extrem widerstandsfähigen Maskenmaterials.

Weiterhin hat sich gezeigt, daß durch eine geeignete Prozeßführung bestimmte Eigenschaften des Sensorelements beeinflußt werden können:
- Durch Reduzierung der Passivierungszyklen verläuft der Ätzprozeß etwas weniger anisotrop und man erreicht keine ideal vertikalen Wände, sondern eine Aufweitung der Ätzgrube nach unten. Man bezeichnet dieses Ätzprofil als "re-entrant". Dies ist v.a. bei Mehrelementsensoren von Vorteil, bei denen eine dünne Zwischenwand von einigen µm eine Ätzgrube von der danebenliegenden trennt. Die Wände sind an der Waferrückseite dünner als an der Membranseite, was zu erhöhter Stabilität führt.
- Um beim Auftreffen auf die dielektrische Membran diese nicht zu schädigen und trotzdem eine gute Strukturübertragung und saubere Membranoberfläche sicherzustellen, sollte der Gesamtprozeß in mehreren Schritten erfolgen, die sich in der Wahl der Prozeßparameter grundlegend unterscheiden. Nach einem ersten Prozeßschritt mit guter Homogenität und (vorteilhaft) hoher Ätzrate folgt, sobald die Membran erreicht wird, ein Prozeßschritt mit sehr hoher Selektivität zum Membranmaterial, d.h. geringer Ätzrate bzgl. Siliziumoxid. Ein nachfolgender rein isotroper Prozeßschritt (d.h. ohne Passivierungszyklen) schließlich entfernt eventuelle Siliziumreste auf der Membran.
- Zur Säuberung der Membran kann weiterhin ein kurze naßchemische Ätzung in TMAHW (Tetraammoniumhydroxid in Wasser) verwendet werden, wobei durch geeignete Verfahren, z.B. Abdeckung durch Photolack, die Wafervorderseite geschützt wird.

In vorteilhafter Ausgestaltung des erfindungsgemäßen Verfahrens wird vor dem Ätzen der Aussparung auf einer der Membran abgewandten Seite des Trägers eine Schicht mit niedriger Ätzrate für das reaktive Ionenätzverfahren aufgebracht. Eine solche Schicht ist vorteilhafterweise eine photolithographisch strukturierbare Schicht, z.B. eine Schicht aus dickem Photolack, eine Siliziumoxidschicht oder eine Metallschicht.
- In weiterhin vorteilhafter Ausgestaltung dieses Verfahrens wird auf die Membran ein wärmesensitiver Bereich aufgebracht.

Weitere vorteilhafte Ausgestaltungen ergeben sich aus den Unteransprüchen und aus der nachfolgenden Beschreibung von Ausführungsbeispielen. Dabei zeigen:
- Fig. 1: einen bekannten Sensor zur Temperaturmessung;
- Fig. 2: ein Ausführungsbeispiel für einen erfindungsgemäßen Temperatursensor;
- Fig. 3: ein weiteres Ausführungsbeispiel für einen erfindungsgemäßen Temperatursensor;
- Fig. 4: den Einsatz eines erfindungsgemäßen Temperatursensors in einer Temperaturmeßeinrichtung;
- Fig. 5: den Einsatz eines erfindungsgemäßen Temperatursensors in einer Temperaturmeßeinrichtung;
- Fig. 6: einen Chipkörper;
- Fig. 7: eine besonders vorteilhafte Ausgestaltung eines Chipkörpers;
- Fig. 8: eine Draufsicht auf ein als Thermopile ausgestalteten Temperatursensor;
- Fig. 9: eine Seitenansicht eines weiteren als Thermopile ausgebildeten Temperatursensors;
- Fig. 10: eine besonders vorteilhafte Ausgestaltung eines als Thermopile ausgestalteten Temperatursensors;
- Fig. 11: eine Seitenansicht eines als pyroelektrischer Sensor ausgebildeten Temperatursensors;
- Fig. 12: einen Chip mit mehreren Sensoren; und
- Fig. 13: ein prinzipielles Verfahren zum Herstellen eines Sensors.

Fig. 1 zeigt einen bekannten Sensor 1 zur Temperaturmessung. Dieser weist einen Siliziumkörper 2 mit einer Aussparung 8 auf. Über der Aussparung ist eine Membran 3 angeordnet. Auf der Membran ist ein wärmesensitiver Bereich 4 aufgebracht. Die Aussparung 8 ist durch Seitenwände 5 begrenzt, die zu der Unterseite 6 des Chipkörpers 2, d.h. der in Bezug auf die Aussparung 8 der Membran 3 gegenüberliegenden Seite, in einem Winkel α von ca. 54,7° angeordnet sind.

Fig. 2 zeigt ein Ausführungsbeispiel für einen erfindungsgemäßen Sensor 10 zur Temperaturmessung. Dieser weist einen Chipkörper 12 mit einer Aussparung 18 auf. Die Aussparung 18 ist seitlich durch Seitenwände 15 begrenzt. Über der Aussparung 18 ist eine Membran 13 angeordnet. Auf der Membran 13 ist wiederum ein wärmesensitiver Bereich 14 angeordnet. Dieser ist in besonders vorteilhafter Ausgestaltung infrarotsensitiv. Die Seitenwände 15 der Aussparung 18 sind zu der Unterseite 16 des Chipkörpers 12 in einem Winkel α ausgerichtet. Der Winkel α beträgt 8O bis 100°. In Bezug auf die Membran 13 sind die Seitenwände 15 in einem Winkel β von entsprechend 100 bis 80° angeordnet.

Fig. 3 zeigt einen gegenüber dem Temperatursensor 10 in Fig. 2 vorteilhaften Sensor 30 zum Messen einer Temperatur. Dabei haben gleiche Teile die gleichen Bezugszeichen wie in Fig. 2. Die Seitenwände 15 der Aussparung 18 beim Sensor 30 sind derart zur Membran 13 angeordnet, daß der Winkel β zwischen 80 und 89° beträgt. Auf diese Weise ist die der Membran 13 gegenüberliegende Fläche 17 an der Unterseite 16 des Chipkörpers 12 kleiner als die die Aussparung 18 begrenzende Fläche der Membran 13. Bei vernachlässigbarem Verlust an Sensitivität wird auf diese Weise ein besonders stabiler Chipkörper 12 mit geringen Außenabmessungen erreicht.

Die Membran 13 der Sensoren 10 und 20 in den Fig. 2 und Fig. 3 besteht vorteilhafterweise aus dielektrischen Schichten, z.B. aus SiO₂ oder Si₃N₄ SiC oder deren Kombination. Die Membran wird durch reaktives Trockenätzen (sogenanntes DRIE) ausgeführt.

Bei Ausgestaltung der Sensoren 1O bzw. 20 als Thermopile weist der wärmesensitive Bereich 14 eine Reihenschaltung aus zumindest zwei thermoelektrischen Materialien, wie etwa n-leitendes Polysilizium und Aluminium, p-leitendes Polysilizium und Aluminium oder vorteilhafterweise n-leitendes und p-leitendes Silizium, auf. Bei einer Ausgestaltung des Sensors 10 bzw. des Sensors 20 als pyroelektrischer Sensor weist der wärmesensitive Bereich 14 eine pyroelektrische Dünnschicht zwischen einer Metallrückelektrode und einer Deckelelektrode auf. In einer Ausführung des Sensors 10 bzw. des Sensors 20 als Bolometer weist der wärmesensitive Bereich 14 eine Mäanderschicht aus einem Metalloxid oder einem Halbleiter auf.

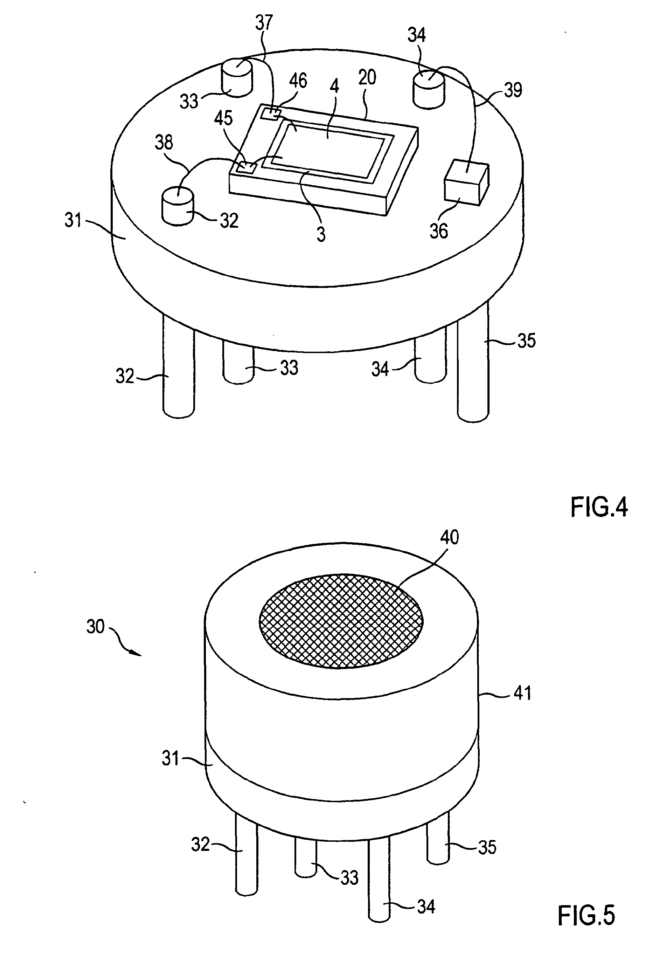

Fig. 4 und Fig. 5 zeigen den vorteilhaften Einsatz eines Sensors 20 in einer Temperaturmeßeinrichtung. Anstelle des Sensors 20 kann auch der Sensor 10 verwendet werden. Gemäß dem Ausführungsbeispiel in Fig. 4 ist der Sensor 2O auf einer Bodenplatte 31, insbesondere zentrisch, plaziert. Die Bodenplatte 31 ist z.B. eine Transistor-Bodenplatte TO-5 oder TO-18. Der Chip 20 wird vorteilhafterweise mittels eines Epoxidharzklebers mit guter Wärmeleitfähigkeit auf die Bodenplatte 31 geklebt.

Durch die Bodenplatte 31 sind Kontakte 32, 33 und 34 geführt. Die Kontakte 32 und 33 sind über leitende Verbindungen 38 und 37 mit sogenannten Bondinseln 45 und 46 auf dem Sensor 20 verbunden.

Vorteilhafterweise ist zur Messung der Eigentemperatur der Temperaturmeßeinrichtung 30 ein zusätzlicher Temperatursensor 36 auf der Bodenplatte 31 angeordnet. Dieser ist über einen Leiter 39 mit dem Kontakt 34 verbunden.

Auf der Bodenplatte ist - wie in Fig. 5 dargestellt - ein Gehäuse 41 angeordnet, das den Sensor 20 umschließt. Das Gehäuse 41 weist einen Infrarotfilter 40 auf. In vorteilhafter Weise ist das Gehäuse 41 als Transistorkappe ausgeführt.

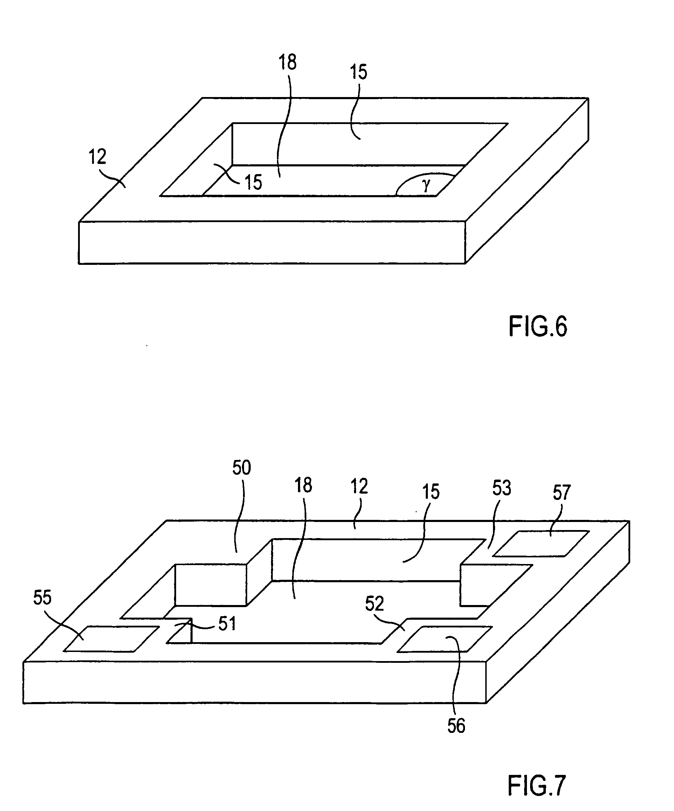

Fig. 6 zeigt den Aufbau des Chipkörpers 12. Das Bezugszeichen 18 bezeichnet die Aussparung und das Bezugszeichen 15 bezeichnet die Seitenwände. Die Seitenwände sind vorteilhafterweise in etwa rechtwinklig zueinander angeordnet, d.h. der mit dem Bezugszeichen γ bezeichnete Winkel ist in etwa 90°.

Fig. 7 zeigt eine besonders vorteilhafte Ausgestaltung des Chipkörpers 12. Dabei weist die Aussparung 18 eine kreuzförmige Grundfläche auf, so daß der Chipkörper 12 die Aussparung 18 mit massiven Ecken 50, 51, 52 und 53 begrenzt. In den Ecken 51, 52 und 53 sind Bondinseln 55, 56 und 57 vorgesehen.

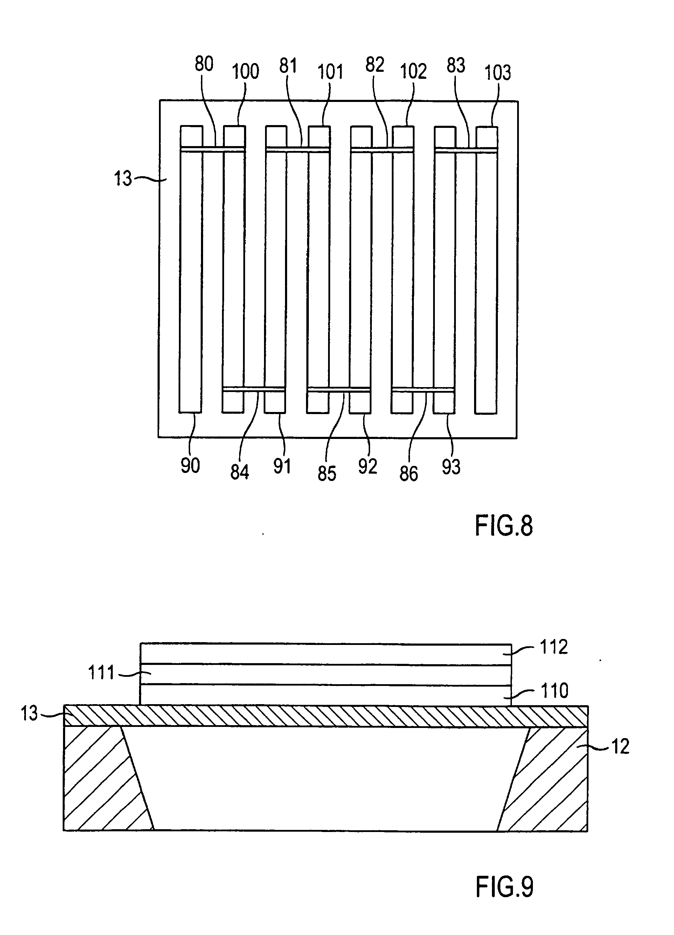

Fig. 8 zeigt eine Draufsicht auf einen als Thermopile ausgebildeten Temperatursensor. Dabei sind auf der Membran 13 Streifen 90, 91, 92, 93 aus p-leitendem Silizium, p-leitendem polykristallinem Silizium oder p-leitendem polykristallinem Silizium-Germanium und Streifen 100, 101, 102, 103 aus n-leitendem Silizium, n-leitendem polykristallinem Silizium oder n-leitendem polykristallinem Silizium-Germanium angeordnet. Die einzelnen Streifen 90, 91, 92, 93, 100, 101, 102, 103 sind über Stege 80, 81, 82, 83, 84, 85, 86, vorteilhafterweise Aluminiumstege, miteinander zu einer elektrischen Reihenschaltung verbunden. In Fig. 8 ist eine Konfiguration mit acht Streifen dargestellt. Vorteilhafterweise sind auf der Membran 13 zwanzig bis zweihundert Streifen, vorzugsweise sechzig bis hundertzwanzig Streifen,k angeordnet. Selbstverständlich sind alternative Ausführungen zu den Stegen 80, 81, 82, 83, 84, 85, 86 zur Erzielung einer Reihenschaltung der Streifen 90, 91, 92, 93, 100, 101, 102, 103 möglich.

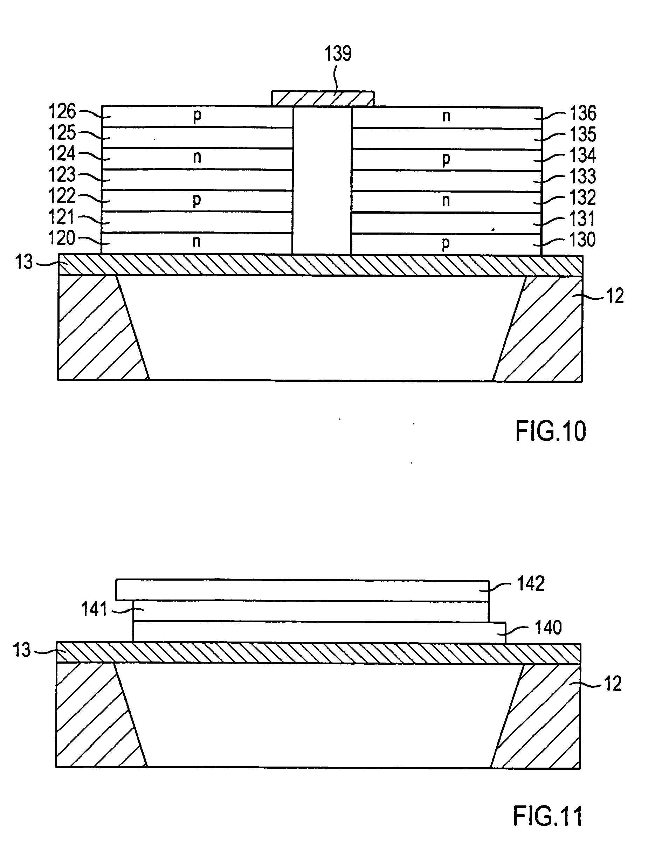

Fig. 9 zeigt eine Seitenansicht eines alternativen als Thermopile ausgebildeten Temperatursensors. Dabei umfaßt der auf der Membran 13 angeordnete wärmesensitive Bereich zwei Schichten 110 und 112 aus thermoelektrischem Material, die durch eine Isolationsschicht 111, z.B. aus Siliziumnitrid oder Siliziumoxid, getrennt sind. Die Schicht 110 besteht dabei aus n-leitendem oder p-leitendem Silizium, n-leitendem oder p-leitendem polykristallinem Silizium oder n-leitendem oder p-leitendem polykristallinem Silizium-Germanium. Die Schicht 112 besteht aus p-leitendem oder n-leitendem Silizium, p-leitendem oder n-leitendem polykristallinem Silizium oder p-leitendem oder n-leitendem polykristallinem Silizium-Germanium. Die beiden Schichten sind mittels eines nicht dargestellten Kontaktfensters in Reihe geschaltet. In vorteilhafter Ausgestaltung sind zwei oder drei durch weitere Isolationsschichten voneinander getrennte Anordnungen gemäß der Anordnung der Schichten 110, 111 und 112 vorgesehen.

Besonders vorteilhaft ist es, n-leitende und p-leitende Schichten sowohl übereinander als auch nebeneinander anzuordnen, wobei die einzelnen Schichten in Reihe geschaltet sind. Ein vereinfachtes Beispiel einer solchen Schichtung zeigt Fig. 10. Dabei bezeichnen Bezugszeichen 120, 124, 132 und 136 Schichten bzw. Streifen aus n-leitendem Silizium, n-leitendem polykristallinem Silizium oder n-leitendem polykristallinem Silizium-Germanium. Bezugszeichen 122, 126, 130 und 134 bezeichnen Schichten bzw. Streifen aus p-leitendem Silizium, p-leitendem polykristallinem Silizium oder p-leitendem polykristallinem Silizium-Germanium. Bezugszeichen 121, 123, 125, 131, 133, 135 bezeichnen Isolationsschichten. Die Schichten 120 und 122, 122 und 124, 124 und 126, 130 und 132, 132 und 134 sowie 134 und 136 sind über Kontaktfenster miteinander elektrisch verbunden. Die Schichten 126 und 136 sind über einen Aluminiumsteg 139 miteinander elektrisch verbunden, so daß sich eine Reihenschaltung aus den Schichten 120, 122, 124, 126, 136, 134, 132 und 130 ergibt. Dabei ist vorteilhafterweise vorgesehen, entsprechend Fig. 8 mehr als zwei Stapel aus Schichten 120 bis 126 und 130 bis 136 vorzusehen.

Fig. 11 zeigt die Seitenansicht eines Ausführungsbeispiels für einen als pyroelektrischen Sensor ausgebildeten Temperatursensor. Dabei umfaßt der auf der Membran 13 aufgebrachte wärmesensitive Bereich eine Unterelektrode 140 und eine Oberelektrode 142 sowie eine zwischen der Unterelektrode 140 und der Oberelektrode 142 angeordnete pyroelektrische Schicht.

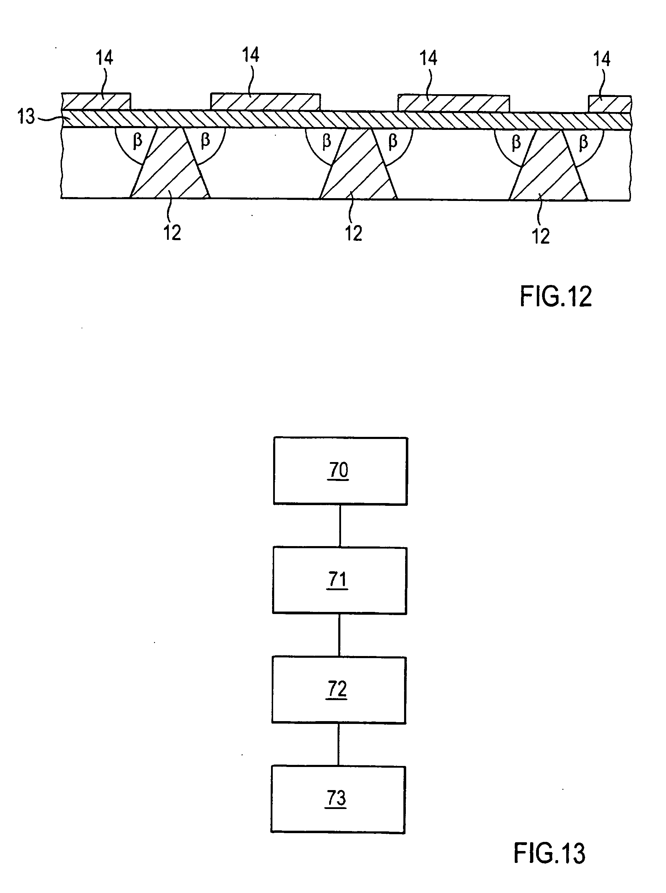

Die erfindungsgemäßen Sensoren können einzeln oder zu mehreren auf einem Chip angeordnet werden. Letzteres ist in Fig. 12 dargestellt. Dabei zeigt Fig. 12 einen Chip 200, der mehrere Sensoren 20 gemäß Fig. 3 umfaßt.

Fig. 13 zeigt ein prinzipielles Verfahren zum Herstellen eines Sensors 10 bzw. 20. Dabei wird in einem ersten Schritt 70 zunächst die Membran 13 auf einem Träger aufgebracht, der im fertigen Zustand des Sensors den Siliziumkörper 12 bildet.

In einem nächsten Schritt 71 wird auf einer der Membran abgewandten Seite 16 des Trägers, d.h. in Bezug auf vorgenannte Ausführungsbeispiele der Seite 16 des Siliziumkörpers 12, eine Schicht mit niedriger Ätzrate für das reaktive Ionenätzverfahren aufgebracht. Eine solche Schicht ist vorteilhafterweise eine photolithographisch strukturierbare Schicht (siehe oben).

In einem weiteren Schritt 72 wird ein wärmesensitiver Bereich 14 auf die Membran 13 aufgebracht.

In einem weiteren Schritt 73 wird anschließend unter der Membran eine Aussparung durch ein vorhergehend erläutertes reaktives Ionenätzverfahren in den Träger geätzt.

Schritt 73 kann auch vor dem Schritt 72 erfolgen.

In besonders vorteilhafter Weise wird bei allen Ausgestaltungen der Sensoren der wärmesensitive Bereich mit einer infrarotabsorbierenden Schicht (in den Figuren nicht dargestellt), die photolithographisch strukturierbar ist, abgedeckt (siehe Anspruch 24). Diese Schicht ist vorteilhafterweise ein Photolack mit Absorberpartikeln, wie er insbesondere in der DE 4221037 A1 "Thermischer Sensor mit Absorberschicht" offenbart ist.

## Patentansprüche

1. Sensor (1O, 2O) zum Messen einer Temperatur mittels eines auf und/oder unter einer Membran (13) aufgebrachten wärmesensitiven Bereichs (14), wobei die Membran über einer Aussparung (18) angeordnet ist, die seitlich vollständig durch Seitenwände (15) begrenzt ist,
**dadurch gekennzeichnet daß;**
die Aussparung seitlich vollständig durch geradlinige Seitenwände begrenzt ist,
aneinandergrenzende Seitenwände in einem Winkel von mindestens 80° zueinander angeordnet sind,
die Seitenwände (15) in einem Winkel zwischen 80° und 100° zu der Membran angeordnet sind, und
die Aussparung durch ein reaktives Ionenätzverfahren geätzt ist.

2. Sensor (10, 20) nach Anspruch 1, **dadurch gekennzeichnet, daß** aneinandergrenzende Seitenwände in einem Winkel von im wesentlichen 90° zueinander angeordnet sind.

3. Sensor (10, 20) nach einem der vorhergehenden Ansprüche, **dadurch gekennzeichnet, daß** alle Seitenwände im wesentlichen aus Silizium bestehen.

4. Sensor (10, 20) nach einem der vorhergehenden Ansprüche, **dadurch gekennzeichnet, daß** der wärmesensitive Bereich (14) eine Reihenschaltung aus zumindest zwei thermoelektrischen Materialien aufweist.

5. Sensor (10, 20) nach Anspruch 4, **dadurch gekennzeichnet, daß** die zwei thermoelektrischen Materialien jeweils p-leitendes Silizium und Aluminium oder n-leitendes Silizium und Aluminium oder p-leitendes Silizium und n-leitendes Silizium sind.

6. Sensor (10, 20) nach Anspruch 4 oder 5, **dadurch gekennzeichnet, daß** die Reihenschaltung nebeneinander angeordnetes p-leitendes Silizium und n-leitendes Silizium aufweist.

7. Sensor (10, 20) nach Anspruch 4 oder 5, **dadurch gekennzeichnet, daß** die Reihenschaltung zumindest eine p-leitende Siliziumschicht und zumindest eine n-leitende Siliziumschicht aufweist, die übereinander angeordnet und durch eine Isolationsschicht getrennt sind.

8. Sensor (10, 20) nach einem der Ansprüche 1 bis 3, **dadurch gekennzeichnet, daß** der wärmesensitive Bereich einen Stapel aus zwei Elektrodenschichten und eine zwischen den zwei Elektrodenschichten angeordnete pyroelektrische Schicht aufweist.

9. Sensor (10, 20) nach einem der Ansprüche 1 bis 3, **dadurch gekennzeichnet, daß** der wärmesensitive Bereich eine Mäanderschicht aus einem Metalloxid oder einem Halbleiter aufweist.

10. Sensor (10, 20) nach einem der vorhergehenden Ansprüche, **dadurch gekennzeichnet, daß** die Membran rechteckig ist.

11. Sensor (10, 20) nach Anspruch 10, **dadurch gekennzeichnet, daß** die Aussparung (18) eine kreuzförmige Grundfläche aufweist.

12. Halbleiterchip, insbesondere Siliziumchip, **dadurch gekennzeichnet, daß** er einen Sensor nach einem der vorhergehenden Ansprüche aufweist.

13. Sensor (10, 20) zum Messen einer Temperatur mittels eines auf und/oder unter einer Membran (13) aufgebrachten wärmesensitiven Bereich (14) nach einem der Ansprüche 5-7, 10, 11, wobei der wärmesensitive Bereich (14) eine Reihenschaltung aus zumindest zwei thermoelektrischen Materialien aufweist, **dadurch gekennzeichnet, daß** die zwei thermoelektrischen Materialien jeweils p-leitendes Silizium, p-leitendes polykristallines Silizium oder p-leitendes, polykristallines Silizium-Germanium und n-leitendes Silizium, n-leitendes polykristallines Silizium oder n-leitendes polykristallines Silizium-Germanium sind.

14. Sensor (10, 20) nach Anspruch 13, **dadurch gekennzeichnet, daß** die Reihenschaltung nebeneinander angeordnetes p-leitendes Silizium, p-leitendes polykristallines Silizium oder p-leitendes polykristallines Silizium-Germanium und n-leitendes Silizium, n-leitendes polykristallines Silizium oder n-leitendes polykristallines Silizium-Germanium aufweist.

15. Sensor (10, 20) nach Anspruch 13 oder 14, **dadurch gekennzeichnet, daß** die Reihenschaltung 20 bis 200, vorzugsweise 60 bis 120, insbesondere paarweise, nebeneinander angeordnete Schichten aus p-leitendem Silizium, p-leitendem polykristallinem Silizium oder p-leitendem polykristallinem Silizium-Germanium und n-leitendem Silizium, n-leitendem polykristallinem Silizium oder n-leitendem polykristallinem Silizium-Germanium aufweist.

16. Sensor (10, 20) nach Anspruch 14 oder 15, **dadurch gekennzeichnet, daß** die Reihenschaltung zumindest eine p-leitende Siliziumschicht, eine p-leitende polykristalline Siliziumschicht oder eine p-leitende polykristalline Silizium-Germanium-Schicht und zumindest eine n-leitende Siliziumschicht, eine n-leitende polylcristalline Siliziumschicht oder eine n-leitende polykristalline Silizium-Germanium-Schicht aufweist, die übereinander angeordnet und durch eine Isolationsschicht getrennt sind.

17. Sensor (10, 20) nach Anspruch 16, **dadurch gekennzeichnet, daß** die Reihenschaltung zwei oder drei Schichtpaare aus p-leitendem Silizium, p-leitendem polykristallinem Silizium oder p-leitendem polykristallinem Silizium-Germanium und n-leitendem Silizium, n-leitendem polykristallinem Silizium oder n-leitendem polykristallinem Silizium-Germanium aufweist, die übereinander angeordnet und durch eine Isolationsschicht getrennt sind.

18. Sensor (10, 20) nach einem der Ansprüche 1 bis 11 und 13 bis 17 sowie Halbleiterchip nach Anspruch 12 **dadurch gekennzeichnet, daß** auf dem Temperatursensitiven Bereich (14) eine infrarotabsorbierende Schicht aufgebracht ist, die photoelektrisch strukturierbar ist.

## Claims

1. A sensor (10,20) for measuring a temperature by means of a heat-sensitive area (14) applied onto and/or underneath a membrane (13), the membrane being arranged above a recess (18) fully defined laterally by side walls (15),
**characterized in that**
the recess (18) is fully defined laterally by straight side walls (15), adjoining side walls (15) are arranged at an angle of at least 80° with respect to each other, and
the side walls (15) are arranged at an angle between 80° and 100° relative to the membrane, and
the recess is etched by a reactive ion etching method.

2. The sensor (10,20) according to claim 1, **characterized in that** adjoining side walls are arranged at an angle of substantially 90° relative to one another.

3. The sensor (10,20) according to any of the preceding claims, **characterized in that** all the side walls substantially consist of silicon.

4. The sensor (10,20) according to any of the preceding claims, **characterized in that** the heat-sensitive area (14) has a series connection comprising at least two thermoelectric materials.

5. The sensor (10,20) according to claim 4, **characterized in that** the two thermoelectric materials are respectively p-conducting silicon and aluminum or n-conducting silicon and aluminum or p-conducting silicon and n-conducting silicon.

6. The sensor (10,20) according to claim 4 or 5, **characterized in that** the series connection includes p-conducting silicon and n-conducting silicon arranged side by side.

7. The sensor (10,20) according to claim 4 or 5, **characterized in that** the series connection has at least one p-conducting silicon layer and at least one n-conducting silicon layer, which are superposed and separated by an insulating layer.

8. The sensor (10,20) according to any of claims 1 to 3, **characterized in that** the heat-sensitive area has a stack of two electrode layers and a pyroelectric layer arranged between said two electrode layers.

9. The sensor (10,20) according to any of claims 1 to 3, **characterized in that** the heat-sensitive area is a meander layer of a metal oxide or a semiconductor.

10. The sensor (10,20) according to any of the preceding claims, **characterized in that** the membrane is rectangular.

11. The sensor (10,20) according to claim 10, **characterized in that** recess (18) has a cruciform base.

12. A semiconductor chip, in particular silicon chip, **characterized in that** it includes a sensor according to any of the preceding claims.

13. A sensor (10,20) for measuring a temperature by means of a heat-sensitive area (14) applied onto and/or underneath a membrane (13), in particular according to any of claims 5-7, 10, 11, the heatsensitive area (14) including a series connection of at least two thermoelectric materials, **characterized in that** the two thermoelectric materials are respectively p-conducting silicon, p-conducting polycrystalline silicon or p-conducting polycrystalline silicon-germanium and n-conducting silicon, n-conducting polycrystalline silicon or n-conducting polycrystalline silicon-germanium.

14. The sensor (10,20) according to claim 13, **characterized in that** the series connection includes, arranged side by side, p-conducting silicon, p-conducting polycrystalline silicon or p-conducting polycrystalline silicongermanium and n-conducting silicon, n-conducting polycrystalline silicon or n-conducting polycrystalline silicon-germanium.

15. The sensor (10,20) according to claim 13 or 14, **characterized in that** the series connection has 20 to 200, preferably 60 to 120, layers arranged side by side, in particular in pairs, of p-conducting silicon, p-conducting polycrystalline silicon or p-conducting polycrystalline silicongermanium and n-conducting silicon, n-conducting polycrystalline silicon or n-conducting polycrystalline silicon-germanium.

16. The sensor (10,20) according to claim 14 or 15, **characterized in that** the series connection has at least one p-conducting silicon layer, p-conducting polycrystalline silicon layer or p-conducting polycrystalline silicon-germanium layer and at least one n-conducting silicon layer, n-conducting polycrystalline silicon layer or n-conducting polycrystalline silicon-germanium layer, which are superposed and separated by an insulating layer.

17. The sensor (10,20) according to claim 16, **characterized in that** the series connection has two or three layer pairs of p-conducting silicon, p-conducting polycrystalline silicon or p-conducting polycrystalline silicon-germanium and n-conducting silicon, n-conducting polycrystalline silicon or n-conducting polycrystalline silicon-germanium, which are superposed and separated by an insulating layer.

18. The sensor (10,20) according to any of claims 1 to 11 and 13 to 17 as well as semiconductor chip according to claim 12, **characterized in that** an infraredabsorbing layer which can be patterned photoelectrically is applied to the temperaturesensitive area (14).

## Revendications

1. Capteur (10, 20) pour la mesure d'une température au moyen d'une zone thermosensible (14) appliquée sur et/ou sous une membrane (13), ladite membrane étant disposée au-dessus d'une cavité (18) entièrement délimitée sur ses côtés par des parois latérales (15),
**caractérisé en ce que**
la cavité est entièrement délimitée sur ses côtés par des parois latérales droites,
les parois latérales adjacentes sont disposées en formant un angle d'au moins 80° l'une par rapport à l'autre,
les parois latérales (15) sont disposées en formant un angle compris entre 80° et 100° par rapport à la membrane, et **en ce que** la cavité est gravée par un procédé de gravure ionique réactive.

2. Capteur (10, 20) selon la revendication 1, **caractérisé en ce que** les parois latérales adjacentes sont disposées en formant un angle sensiblement de 90° l'une par rapport à l'autre.

3. Capteur (10, 20) selon l'une des revendications précédentes, **caractérisé en ce que** toutes les parois latérales sont réalisées essentiellement en silicium.

4. Capteur (10, 20) selon l'une des revendications précédentes, **caractérisé en ce que** la zone thermosensible (14) comporte un montage en série composé d'au moins deux matériaux thermoélectriques.

5. Capteur (10, 20) selon la revendication 4, **caractérisé en ce que** les deux matériaux thermoélectriques sont respectivement du silicium conducteur de type p et de l'aluminium, ou du silicium conducteur de type n et de l'aluminium, ou du silicium conducteur de type p et du silicium conducteur de type n.

6. Capteur (10, 20) selon la revendication 4 ou 5, **caractérisé en ce que** le montage en série comporte du silicium conducteur de type p et du silicium conducteur de type n disposés côte à côte.

7. Capteur (10, 20) selon la revendication 4 ou 5, **caractérisé en ce que** le montage en série comporte au moins une couche de silicium conducteur de type p et au moins une couche de silicium conducteur de type n disposées l'une au-dessus de l'autre et séparées par une couche d'isolation.

8. Capteur (10, 20) selon l'une des revendications 1 à 3, **caractérisé en ce que** la zone thermosensible présente un empilement de deux couches d'électrodes, et une couche pyroélectrique disposée entre les deux couches d'électrodes.

9. Capteur (10, 20) selon l'une des revendications 1 à 3, **caractérisé en ce que** la zone thermosensible comporte une couche sinueuse d'un oxyde métallique ou d'un semi-conducteur.

10. Capteur (10, 20) selon l'une des revendications précédentes, **caractérisé en ce que** la membrane est de forme rectangulaire.

11. Capteur (10, 20) selon la revendication 10, **caractérisé en ce que** la cavité (18) présente une surface de base cruciforme.

12. Puce semi-conductrice, en particulier puce de silicium, **caractérisée en ce qu'**elle comporte un capteur selon l'une des revendications précédentes.

13. Capteur (10, 20) pour la mesure d'une température au moyen d'une zone thermosensible (14) appliquée sur et/ou sous une membrane (13) selon l'une des revendications 5 à 7, 10, 11, la zone thermosensible (14) comportant un montage en série composé d'au moins deux matériaux thermoélectriques, **caractérisé en ce que** les deux matériaux thermoélectriques sont respectivement du silicium conducteur de type p, du silicium polycristallin conducteur de type p ou du silicium-germanium polycristallin conducteur de type p et du silicium conducteur de type n, du silicium polycristallin conducteur de type n ou du silicium-germanium polycristallin conducteur de type n.

14. Capteur (10, 20) selon la revendication 13, **caractérisé en ce que** le montage en série comporte du silicium conducteur de type p, du silicium polycristallin conducteur de type p ou du silicium-germanium polycristallin conducteur de type p et du silicium conducteur de type n, du silicium polycristallin conducteur de type n ou du silicium-germanium polycristallin conducteur de type n disposés côte à côte.

15. Capteur (10, 20) selon la revendication 13 ou 14, **caractérisé en ce que** le montage en série 20 à 200, de préférence 60 à 120, comporte des couches de silicium conducteur de type p, de silicium polycristallin conducteur de type p ou de silicium-germanium polycristallin conducteur de type p et de silicium conducteur de type n, de silicium polycristallin conducteur de type n ou de silicium-germanium polycristallin conducteur de type n disposées côte à côte, notamment par paires.

16. Capteur (10, 20) selon la revendication 14 ou 15, **caractérisé en ce que** le montage en série comporte au moins une couche de silicium conducteur de type p, une couche de silicium polycristallin conducteur de type p ou une couche de silicium-germanium polycristallin conducteur de type p et au moins une couche de silicium conducteur de type n, une couche de silicium polycristallin conducteur de type n ou une couche de silicium-germanium polycristallin conducteur de type n, disposées l'une au-dessus de l'autre et séparées par une couche d'isolation.

17. Capteur (10, 20) selon la revendication 16, **caractérisé en ce que** le montage en série comporte deux ou trois paires de couches de silicium conducteur de type p, de silicium polycristallin conducteur de type p ou de silicium-germanium polycristallin conducteur de type p et de silicium conducteur de type n, de silicium polycristallin conducteur de type n ou de silicium-germanium polycristallin conducteur de type n, disposées l'une au-dessus de l'autre et séparées par une couche d'isolation.

18. Capteur (10, 20) selon l'une des revendications 1 à 11 et 13 à 17, ainsi que puce semi-conductrice selon la revendication 12, **caractérisés en ce qu'**une couche d'absorption d'infrarouges est appliquée sur la zone thermosensible (14), laquelle est photoélectriquement structurable.
